# EUROPEAN PATENT SPECIFICATION

(11) **EP 2 647 481 B1**
(45) Date of publication and mention of the grant of the patent: **25.02.2015**
(21) Application number: 12400010.0
(22) Date of filing: 05.04.2012
(51) Int. Cl.: B29C 45/44, F16F 1/366

(54) **Tool and method for manufacturing of fibre composite compression coil springs.**
Werkzeug und Verfahren zum Herstellen von Faserverbundstoffkompressionsspulenfedern.
Outil et procédé de fabrication de ressorts hélicoïdaux de compression en composite de fibres.

(43) Date of publication of application: 09.10.2013
(73) Proprietor: AIRBUS HELICOPTERS DEUTSCHLAND GmbH, 86609 Donauwörth (DE)
(72) Inventor: Hauber, Michael, 91781 Weissenburg (DE); Ramesh, Abishek, London ER2 0RF (GB); Wolf, Christian, 89231 Neu-Ulm (DE)
(74) Representative: GPI & Associés

(56) References cited:
- EP-A1- 1 880 822
- CH-A- 429 141
- US-A1- 2011 169 205

## Description

The invention is related to a tool for manufacturing of fibre composite compression coil springs with the features of claim 1 and a method for manufacturing of fibre composite compression coil springs by means of said tool with the features of claim 5.

Within aircraft doors springs of several kinds are used. For example torsional and tension springs as parts of the so called anti-lowering-mechanism and compression springs for manner of securing certain parts positions within the entire door structure. Most of the (coil) springs used in today's aircraft (doors) are made of stainless steel. These springs provide sufficient elastic forces, heat and chemical resistance but their high density and heavy weight interfere with the needs of modern lightweight aircraft structures. Fibre reinforced plastic (FRP) coil springs with a thermoplastic resin can be used to reduce the aircraft doors weight.

The document JP 2005035195 A provides a molding equipment comprising a first mold member, a second mold member joined to and separated from the first mold member, a core disposed at the joining surfaces of these mold members and helical cavities are formed in the first and second mold members and in the circumference of the core. Slide cores shifting in parallel to the joining surface of the first mold member are disposed for the first mold member, while slide cores shifting in parallel to the joining surface of the second mold member are disposed. The helical cavities are injection-molded by an arrangement formed of a combination of the cavities on the mold member side forming a helix of a prescribed length with the cavity on the slide core side, in this manufacturing method of a coil spring of a synthetic resin.

The document JP 2004160879 A provides a device for manufacturing a coil spring made of a thermoplastic resin comprises a molding means for executing injection molding of an intermediate spring with a lower height than a completed spring and a deforming means for deforming the intermediate spring in a plastically deformable state to a height same as a completed spring. The molding means is provided with a movable mold having a flat top surface, a round rod shaped center core arranged at the top of the movable mold in the perpendicular state, and a pair of side cores made of two vertically divided pieces which are arranged by holding the center core in between so that they approach or are separated from each other and become a cylindrical body when assembled. Molding grooves to form a cavity for molding the intermediate spring are formed on the inner face of both the side cores.

The document DE 102008057463 A1 discloses a spring made from a fibre reinforced material with two end sections, where twisting sections are arranged between the end sections. The end sections and the twisting sections are connected by deflecting sections. All sections of a fibre reinforced material are made up of serpentine folded track.

The document US 4260143 A discloses a carbon fibre reinforced composite coil spring which is made from a braid formed of carbon fibres oriented at a preferred angle to the braid axis of approximately plus or minus 45° and impregnated with a resin which serves as a substantially continuous matrix phase. Longitudinal reinforcing fibre may be incorporated into the braid to prevent it from straightening under longitudinal tension. The carbon fibre reinforced composite coil spring is formed by wrapping the braid, impregnated with a non-solidified resin, within a groove which extends helically along the surface of a helical mandrel and solidifying the resinous matrix material, and then removing the solid composite coil spring from the helical mandrel.

The document US5558393 A discloses a circular multi-wave composite compression spring formed from a carbon fibre reinforced laminate. The circular compression spring is comprised of unidirectional graphite fibres encased in a polymeric resin of generally rectangular cross-section such that adjacent crests and troughs of the waves in adjacent turns of the spring contact each other along a radial line generally extending from the longitudinal axis of the spring. The line contact provides for increased fatigue life and more stable loading of the spring under compression. The carbon fibre reinforced laminate provides comparable strength characteristics similarly configured springs fabricated from conventional materials while providing significantly reduced weight. Furthermore, the composite spring offers increased performance parameters such as increased linearity response over a wider spring deflection range and with insignificant hysteresis.

The document DE4445307 C1 discloses fibre-reinforced thermoplastics mouldings by making a prepreg from short, long and or continuous fibres and thermoplastics and hot forming under pressure in a negative mould. The prepreg is first heated to the forming temperature and then flow pressed in the mould. The prepreg is made in rod form and is cut to length before forming.

Known FRP-spring solutions do not or not completely provide sufficient elastic strain, low density and low cost manufacturing at the same time. Whereas metal compression coil springs can be produced at low cost and do provide elastic forces and strains of nearly any possible value they are too heavy to fulfill the weight saving efforts of modern aircraft development. Existing fibre composite coil springs on the other hand provide low weight but lack of the elastic forces and strains needed within door structures. Their manufacturing tools and processes need further improvements to meet the demands of a cost-efficient industrial production.

The document EP1 880 822 A1 discloses a coiled part formed of plastic material by injection molding, wherein the cross section of the coiled part has a polygonal shape having at least one corner portion or a rounded face at apart thereof. The problem to be solved is to provide a tool for manufacturing of fibre composite compression coil springs, a corresponding manufacturing method and said coil springs. The manufactured springs have to be usable for the same purposes as the existing state-of-the-art steel springs currently used in aircraft doors. In addition the springs' weight has to be reduced compared to state-of-the-art metal compression coil springs whereas manufacturing costs have to be as low as possible. Hence the tool for manufacturing shall be reusable, consist of only a few numbers of parts and allow the realization of manufacturing processes suitable for fibre composite materials.

The solution is provided with a tool with the features of claim 1. A further solution is provided with a corresponding manufacturing method with the features of claim 5. According to the invention a tool for the manufacturing of a fibre composite compression coil spring consisting of a central core, at least one boot and an outer mould member is provided. The inventive tool allows the production of fibre composite compression coil springs with a trapezoidal cross section by means of cavities having a trapezoidal cross section matching the cross section of the springs after the manufacturing process is finished. Due to the fact that the inventive tool consists of only a very little number of compact parts and said parts are of a very simple shape, the tool as a whole is very simple considering its assignment of producing fibre reinforced coil springs. As a consequence the inventive tool is easy to store. Moreover the tool is reusable. The trapezoidal shaped cross section of the inventive tools cavities allow the demoulding of the inventive coil spring in connection with certain production processes like injection moulding or similar production processes.

According to a preferred embodiment of the invention the tool for manufacturing of an inventive fibre composite compression coil spring is provided with a central core, at least a first boot comprising cavities of a trapezoidal shaped cross section and an outer mould member for covering the spring. Said outer mould member is also equipped with cavities with a trapezoidal cross section for forming a helical inventive coil spring with the same trapezoidal cross section as the cavities of the outer mold member and the boot. The inventive tool is reusable allowing an easy, quick and cost efficient production of the inventive coil springs. The inventive tool comprises only a few parts of simple shape. In combination with an injection moulding production process or a similar production process a high amount of fibres oriented in the inventive coil spring's contour direction can be provided by means of the inventive tool. The inventive tooling concept allows an easy production of the inventive coil springs with one plain end and one open end or both ends of the inventive coil spring open with only the central core and the outer mould member with the central core providing the sprue for injection of material. Another advantage of the inventive tooling concept is that the inventive coil spring is easy to demould by screwing it out of the tool.

According to a further preferred embodiment of the invention the cavities of a trapezoidal shaped cross section have two parallel sides oriented parallel to the tool's central main axis, with the trapezoid's basis representing both the inner margin of the cavities and the outer margin of the central core and the shorter side parallel thereto representing the cavities' outer margin. Said shape allows injection moulding and a demoulding of finished parts without or at least with significantly less undercut than comparable circular or rectangular cross sectional shapes would require.

According to a further preferred embodiment of the invention one plain end and one open end of the final spring are provided by the cavities of the tool or both ends of the inventive coil spring are open.

According to a further preferred embodiment of the invention a second boot is provided for the inventive tool for reasons of demouldability of an inventive coil spring with one closed end.

According to the invention the central core is provided with the sprue for material.

According to a preferred embodiment of the invention a production method with the inventive tool for manufacture of an inventive coil spring comprises the following steps: Assembling of the tool parts to form an inner closed contour that matches the springs final shape by mounting preferably the first and second boot onto the outer mould member and shifting the central core into the outer mould member in such a manner that the tool is in its closed condition, injecting the fibre reinforced composite material whilst the tool is in closed condition and demoulding of the finished spring after hardening of the spring material by pulling out first the central core of the outer mould member. The inventive production method allows the production of springs with fibres mainly oriented following the springs contour direction.

According to a further preferred embodiment of the invention the outer mould member has to be screwed relative to the enclosed spring after the two boots have been removed.

According to a further preferred embodiment of the invention thermoplastic resin and carbon fibres or glass fibres are used for the manufacturing process.

According to a further preferred embodiment of the invention the inventive tool and additionally a method like the one described in DE000004445307C1 is used to obtain an inventive coil spring providing sufficient mechanical values concerning the inventive coil spring's stiffness. These springs are usable for the same purposes as the existing state-of-the-art steel springs, such as currently used in aircraft doors. The inventive coil spring's weight is reduced compared to state-of-the-art metal compression coil springs while manufacturing costs are - due to the target of an industrial production - as low as possible. The inventive coil spring's properties meet numerous specific constraints, especially like resistance to fluids, hot and wet conditions, thermal fluctuation, smoke emission and so depending on their place of installation within an aircraft. Mechanically the inventive coil spring provides for sufficient stiffness, particularly sufficient torsional stiffness, sufficient fatigue strength and breaking strain. Mechanically the fibres are carrying the main part of the applied spring loads. Hence, the fibres of the inventive coil springs are mainly oriented following the inventive coil spring's contour direction. The trapezoidal cross sections of the tools cavities provide the same cross section to the resulting inventive coil spring resulting in a much higher stiffness into the same space said space being yet another critical point within the process of aircraft design. The trapezoidal shape also allows guidance of the inventive coil spring by an internal guide rod which in consequence allows an easier visual inspection without the need for removal of parts compared to outer guided compression springs. According to a further preferred embodiment of the invention the inventive coil spring is provided with one plain end and one open end for a variant of manufacturing or both ends of the inventive coil spring are open for a production with only the central core and the outer mould member and with the central core providing the sprue for material.

A preferred embodiment of the invention is presented with reference to the following description and the attached drawings.
Fig. 1 shows a spherical view of tool parts useful for understanding the invention in disassembled condition.
Fig. 2 shows a spherical view of the tools parts being partly and completely assembled.Fig. 3 shows a spherical view of an embodiment of the invention being partly and completely assembled according to the inventive production method.
Fig. 4 shows views of a finished fibre reinforced compression coil spring and a cutting view of the trapezoidal shaped cross section of said finished fibre reinforced compression coil spring.
Fig. 5 shows a view of the tool including a finished coil spring after the moulding process and the removal of the first and the second boot.

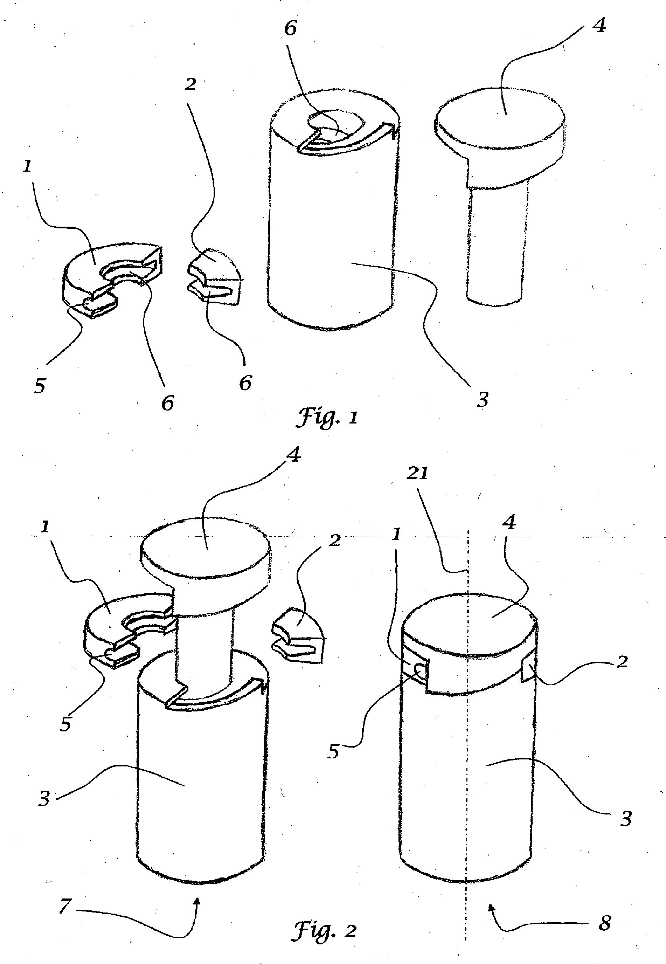

According to Fig. 1, 2 and 5 the tool 7, 8, 9, 10 comprises a first boot 1, a second boot 2, an outer mould member 3 and a central core 4. The tool allows the manufacturing namely moulding of the fibre composite compression coil spring 17. In closed condition the tool is covering the spring 17 during manufacture. In dependence of the final shape of the coil spring 17 the cavities 6 can be configured in such a manner that the spring comprises one open end 16 and one closed end 15 or two open ends 16. In connection herewith the tool has to comprise the first boot 1, the second boot 2, the outer mould member 3 and the central core 4 for a compression coil spring 17 with one closed end 15 and one open end 16 whilst for a compression coil spring with two open ends only the first boot 1, the outer mold member 3 and the central core 4 are needed.

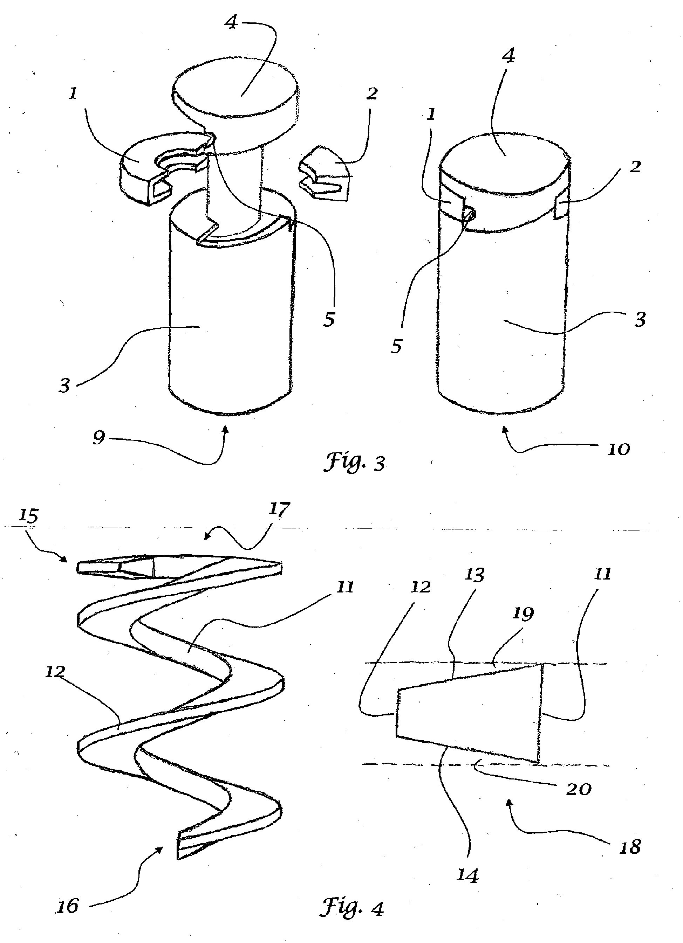

Fig. 4: The first boot 1 provides a cavity 6 having a trapezoidal shaped cross section 18 with two parallel sides 11, 12 oriented parallel to the central main axis of the tool 7, 8, 9, 10. Parallel side 11 is the trapezoid's basis representing the coil spring's 17 inner margin. The shorter parallel side 12 to parallel side 11 represents the coil spring's 17 outer margin. The two connecting sides 13, 14 of the cross sectional area 18 are angled and therefore describing the trapezoidal shape.

Upper and lower angularities 19, 20 between the coil spring's 17 two parallel sides 11, 12 and the two connecting sides 13, 14 should be less than 20 degrees to avoid high tension gradients within the compression coil spring.

According to Fig. 1 and 2 the first boot 1 comprises the sprue 5 for material and the cavity 6 forming the trapezoidal shape 18 of the coil spring 17.

According to Fig. 3 the central core 4 comprises the sprue 5 for material whereas the two boots 1 and 2 together with the outer mould member 3 provide the trapezoidal shaped cavities 6 for the final shape of the trapezoidal shaped cross section of the compression coil spring 17 to be produced.

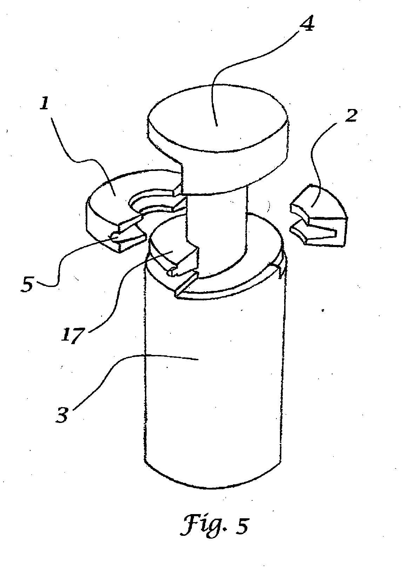

Figure 5 shows the coil spring 17 on the outer mould member 3 around the central core 4 after the moulding process and the removal of the boots 1, 2

### Method for manufacture of the coil spring 17

In a production method with the tool 7, 8, 9, 10 for manufacture of the coil spring 17 first the second boot 2 and subsequently the first boot 1 are mounted onto the outer mould member 3. Second the central core 4 is coaxially shifted into a central opening of the outer mould member 3 along the main central axis of the tool 7, 9 to an assembled tool 8, 10 in its closed condition.

Fibre reinforced composite material is injected through the sprue 5 into the respective cavities 6 of the first and second boot 1, 2 whilst the tool is in its closed condition 7, 9.

The moulded coil spring 17 is demoulded after injection. The coil spring's material is hardened by pulling out at first the central core 4 out of the outer mould member 3. Finally, after the first boot 1 and subsequently the second boot 2 have been removed the outer mould member 3 has to be screwed relative to the enclosed coil spring 17.

### Fibre reinforced compression coil spring 17

According to figures 1, 2, 3 and 4 a tool and the described method are provided to manufacture a fibre reinforced composite coil spring 17 that comprises a trapezoidal cross section 18 with two parallel sides 11, 12 oriented parallel to a tools central main axis 21.

The combination of the utilized materials the tool and the production method allows to produce coil springs 17 with a trapezoidal shaped cross section 18 having a high amount of fibres oriented along the springs contour direction thus providing higher values of mechanical stiffness than comparable state of the art solutions.

The coil spring 17 has at least one open end 16 and one closed end 15 (like shown in Fig. 4) or two open ends 16 (variant not shown) to provide demouldability by means of the described production process.

### Reference List

- 1: first boot
- 2: second boot
- 3: outer mould member
- 4: central core
- 5: sprue
- 6: cavities
- 7: disassembled tool with the first boot providing the sprue
- 8: assembled tool with the first boot providing the sprue
- 9: disassembled tool with the central core providing the sprue
- 10: assembled tool with the central core providing the sprue
- 11: first parallel side (trapezoid basis)
- 12: second parallel side
- 13: upper connecting side
- 14: lower connecting side
- 15: closed end of the spring
- 16: open end of the spring
- 17: coil spring
- 18: cutting view of trapezoidal shaped cross section
- 19: upper angularity
- 20: lower angularity
- 21: central main axis

## Claims

1. A tool (7, 8, 9, 10) for manufacturing fibre composite compression coil springs (17) is provided with a central core (4), at least a first boot (1) and an outer mould member (3) for jointly covering the coil spring (17), the first boot (1) and the outer mold member (3) being equipped with cavities (6) forming the trapezoidal cross section (18) of the helical coil spring (17) to be produced, **characterized in that** the central core (4) is provided with the sprue (5) for material.

2. The tool (7, 8, 9, 10) according to claim 1,
**characterized in that** a second boot (2) is provided.

3. The tool (7, 8, 9, 10) according to claim 2,
**characterized in that** the cavities (6) are formed in such a manner that a spring (17) with one open end (16) and one closed end (15) is formed.

4. The tool (7, 8, 9, 10) according to claim 1,
**characterized in that** the cavities (6) are formed in such a manner that a spring (17) with two open ends (16) is formed.

5. A production method with a tool (7, 8, 9, 10) according to any of the preceding claims for manufacture of a coil spring (17) with the following steps:
a) Assembling of the tool (7, 8, 9, 10) to form an inner closed contour that matches the spring's final shape by mounting at least the first boot (1) onto the outer mould member (3) and shifting the central core (4) into the outer mould member (3) in such a manner that the tool is in closed condition (8, 10)
b) Injecting the fibre reinforced composite material through the sprue (5) in the central core (4) whilst the tool is in closed condition (8, 10) and
c) Disassembly of the tool after hardening of the spring material by pulling out first the central core (4) of the outer mould member (3) and second pulling out at least the first boot (1).
d) Demoulding of the finished coil spring (17) by screwing it relatively to the outer mould member (3).

6. The production method according to claim 5,
**characterized by** assembling of the tool (7, 9) to form an inner closed contour that matches the coil spring's (17) final shape by mounting the first and a second boot (1, 2) onto the outer mould member (3).

## Patentansprüche

1. Ein Werkzeug (7, 8, 9, 10) zur Herstellung von Faserverbundstoffkompressionsspulenfedern (17) ist mit einem zentralen Kern (4), mindestens einem ersten Fitting und einem äußeren Formelement (3) zur gemeinsamen Abdeckung der Schraubenfeder (17) versehen, wobei das erste Fitting (1) und das äußere Formelement (3) mit Hohlräumen (6) versehen sind, die den trapezförmigen Querschnitt (18) der zu erzeugenden Spulenfeder (17) bilden, **dadurch gekennzeichnet, dass** der zentrale Kern mit der Eingussöffnung (5) für das Material versehen ist.

2. Werkzeug (7, 8, 9, 10) nach Anspruch 1,
**dadurch gekennzeichnet, dass** ein zweites Fitting (2) vorgesehen ist.

3. Werkzeug (7, 8, 9, 10) nach Anspruch 2,
**dadurch gekennzeichnet, dass** die Hohlräume (6) so ausgebildet sind, dass eine Feder (17) mit einem offenen Ende (16) und einem geschlossenen Ende (15) gebildet wird.

4. Werkzeug (7, 8, 9, 10) nach Anspruch 1,
**dadurch gekennzeichnet, dass** die Hohlräume (6) so ausgebildet sind, dass eine Feder (17) mit zwei offenen Enden (16) gebildet wird.

5. Ein Herstellungsverfahren mit einem Werkzeug (7, 8, 9, 10) nach einem der vorhergehenden Ansprüche zur Herstellung einer Schraubenfeder (17) in folgenden Schritten:
a) Montage des Werkzeugs (7, 8, 9, 10) so, dass eine innere, der endgültigen Form der Feder entsprechende, geschlossene Kontur gebildet wird, durch die Montage zumindest des ersten Fittings (1) auf das äußere Formelement(3) und durch das Verschieben des zentralen Kerns (4) in das äußere Formelement (3) so, dass das Werkzeug sich im geschlossenen Zustand befindet (8, 10).
b) Einspritzen des faserverstärkten Verbundmaterials durch die Eingussöffnung (5) in den zentralen Kern (4), während sich das Werkzeug im geschlossenen Zustand befindet (8, 10) und
c) Demontage des Werkzeugs nach dem Härten des Federmaterials durch Herausziehen zunächst des zentralen Kerns (4) des äußeren Formelements (3) und dann durch Herausziehen zumindest des ersten Fittings (1).
d) Entformen der fertigen Schraubenfeder (17) durch Drehen gegen das äußere Formelement (3).

6. Das Herstellungsverfahren gemäß Anspruch 5,
**dadurch gekennzeichnet, dass** das Werkzeug (7, 9) so zusammengebaut wird, dass es eine innere, geschlossene Kontur bildet, die der endgültigen Form der Schraubenfeder (17) entspricht, durch Einbau des ersten und zweiten Fittings (1, 2) auf das äußere Formelement (3).

## Revendications

1. Un outil (7, 8, 9, 10) servant à la fabrication de ressorts hélicoïdaux de compression en composite de fibres (17) est équipé d'un noyau central (4), d'au moins un premier soufflet et d'un moule extérieur (3) qui recouvrent conjointement le ressort hélicoïdal (17), le premier soufflet (1) et le moule extérieur (3) étant équipés de cavités (6) formant la coupe transversale trapézoïdale (18) du ressort hélicoïdal (17) à produire, **caractérisé en ce que** le noyau central (4) est équipé de la descente (5) pour le matériau.

2. L'outil (7, 8, 9, 10) selon la revendication 1,
**caractérisé par** la présence d'un second soufflet (2), est fourni.

3. L'outil (7, 8, 9, 10) selon la revendication 2,
**caractérisé par** les cavités (6) formées de manière à obtenir un ressort (17) avec une extrémité ouverte (16) et une extrémité fermée (15).

4. L'outil (7, 8, 9, 10) selon la revendication 1,
est **caractérisé par** les cavités (6) formées de manière à obtenir un ressort (17) avec deux embouts ouverts (16)

5. Un procédé de production avec un outil (7, 8, 9, 10) selon l'une des revendications précédentes relatives à la fabrication d'un ressort hélicoïdal (17) dont les étapes sont les suivantes:
a) Assemblage de l'outil (7, 8, 9, 10) pour former un contour intérieur fermé qui corresponde à la forme finale du ressort en montant au moins le premier soufflet (1) sur le moule extérieur (3) et en déplaçant le noyau central (4) à l'intérieur du moule extérieur (3) de manière à ce que l'outil soit en position fermée (8,10)
b) Injection du matériau renforcé en composite de fibres dans la descente (5) du noyau central (4) avec l'outil est en position fermée (8, 10) et
c) Démontage de l'outil après le durcissement du matériau du ressort en retirant d'abord le noyau central (4) du moule extérieur (3), puis en retirant au moins le premier soufflet (1).
d) Démoulage du ressort hélicoïdal fini (17) en le vissant par rapport au moule extérieur (3).

6. Le procédé de fabrication selon la revendication 5,
est **caractérisé par** l'assemblage de l'outil (7, 9) afin d'obtenir un contour intérieur fermé qui corresponde à la forme finale du ressort hélicoïdal (17) en montant le premier et le second soufflets (1, 2) sur le moule extérieur (3).
